# EUROPEAN PATENT APPLICATION

(11) **EP 4 823 225 A1**
(43) Date of publication of application: **14.10.2026**
(21) Application number: 25169469.1
(22) Date of filing: 09.04.2025
(51) Int. Cl.: H04W 76/15, H04W 24/04, H04W 36/00, H04W 36/08, H04W 36/12

(54) **OPERATING A MOBILE 3GPP COMMUNICATION NETWORK TO FACILITATE REDUNDANT COMMUNICATIONS**

(71) Applicant: Siemens Aktiengesellschaft, 80333 München (DE)
(72) Inventor: Walewski, Joachim, 82008 Unterhaching (DE)
(74) Representative: Siemens Patent Attorneys

(57) **Abstract**

The proposed embodiments involve operating a network node within a mobile 3GPP communication network to enable redundant data transmission through separate user planes (UP1, UP2). Each user plane is terminated by a user plane function UPF1 and UPF2 and wirelessly connected to user equipment UE1 and UE2. These user plane functions can connect externally to one or more network paths of a redundant data network. The method includes providing subscription parameters for at least one user equipment to set up two protocol data unit sessions and assigning the user equipment to one of the user planes. The session management function (SMF) retrieves these subscription parameters to assign the user plane functions and set up the sessions. The session management function then checks if a base station (gNB1) involved in one session is also involved in another session. If the base station is engaged in multiple sessions, the session management function moves one PDU session to a target base station (TgNB). This ensures that redundant data transmission is maintained by having separate paths for each session.

## Description

### Technical Field

The disclosed embodiments pertain to the field of communications networks, particularly communication networks including redundant communication paths. Particular embodiments or aspects pertain to mobile communication networks being configured for at least partial operation of redundant communication paths.

### Background Art

Industrial applications in production and critical infrastructure necessitate stringent dependability standards. In industrial settings, such as manufacturing plants, any disruption in communication can precipitate events of significant operational and safety concern. For example, a communication network failure in a manufacturing plant can halt production lines, resulting in delays and financial losses. Consequently, ultra-reliable communication is imperative for industrial applications that require high dependability. This type of communication ensures continuous and reliable operations, thereby reducing the occurrence of network outages. In order to meet these and other stringent requirements, an implementation of redundant communication paths may be necessary. Redundancy mechanisms ensure that operations may continue uninterrupted even if one communication path fails.

Another requirement of modern manufacturing is an increasing need for wireless data exchange. Mobile networks are intended to support various industrial services such as cloud-based services, industrial control, autonomous driving, and mission-critical communications. Some services, such as autonomous driving, may have ultra-low latency and high data capacity requirements due to safety and performance concerns.

In response to these and other requirements, the 3rd Generation Partnership Project (3GPP) has introduced redundancy mechanisms for the fifth generation or 5G of mobile communications technology. These mechanisms are based on packet or frame duplication and the routing of packets or frames via orthogonal paths, meaning the data is sent through multiple, independent routes. While this development significantly enhances the value of 5G mobile communications for industrial applications, a notable drawback is that the introduced 5G redundancy mechanisms only support redundant user plane paths that converge in one user equipment (UE).

Besides Time-Sensitive Networking (TSN) over 5G, there is presently no 3GPP solution for creating redundant non-overlapping user plane paths through the 5G system. Although 3GPP discussed a solution for two connections between user equipment, this approach was not included in the relevant specifications. The principal deficiency of the existing 5G redundancy mechanisms lies in their inability to facilitate the establishment of distinct, non-overlapping user plane paths. This shortcoming may undermine the reliability and robustness of data transmission in scenarios necessitating high redundancy, as all redundant paths converge at a single user equipment, thereby introducing a potential single point of failure.

Accordingly, there is a need in the art to facilitate an operation of communication nodes of present and next generation 3GPP mobile communication networks, enabling their participation in industrial communications with truly redundant communication paths to address the existing limitation where redundant paths converge at a single user equipment, thereby mitigating the risk of a single point of failure.

### Summary of the Invention

According to an embodiment, a method for operating a network node embodied by a mobile 3GPP communication network is proposed to facilitate a redundant data transmission via separate user planes (UP1, UP2) extending through the network node, each user plane (UP1, UP2) being terminated by a user plane function (UPF1, UPF2) and wirelessly interfaced user equipment (UE1, UE2), each user plane function (UPF1, UPF2) being network-externally connectable to one or more network paths of a redundant data network, the method including the steps of:
a) providing subscription parameters for at least one user equipment (UE1, UE2) to set up at least two protocol data unit sessions and designating said at least one user equipment (UE1, UE2) to one of the separate user planes (UP1, UP2);
b) retrieving, by a session management function (SMF) of the mobile 3GPP communication network, said subscription parameters of the at least one user equipment (UE1, UE2) to assign at least one user plane function (UPF1, UPF2) for setting up said at least two protocol data unit sessions and involving the at least one user equipment (UE1, UE2);
c) determining, by the session management function (SMF), whether a base station (SgNB) engaged in a first protocol data unit session is concurrently engaged in a second protocol data unit session; and
d) migrating, by the session management function (SMF), from the concurrently engaged base station (SgNB) to a target base station (TgNB) exclusively engaged in the first protocol data unit session.

The present embodiments address the existing limitation where redundant paths converge at a single user equipment, thereby mitigating the risk of a single point of failure.

While conventional methods are limited to user equipment hosted on a same physical device, the embodiments described herein are capable of supporting user equipment hosted on disparate devices, thereby offering enhanced flexibility and operational efficiency.

### Brief Description of the Drawing

The objects as well as further advantages of the present invention will become more apparent and appreciated from the following description of the preferred embodiments, taken in conjunction with the accompanying drawing accompanying drawing of which:
- FIG. 1: illustrates an exemplary 3GPP network with redundant user plane paths by use of dual connectivity;
- Fig. 2: illustrates a schematic diagram of functional units participating in a mobile communication network to facilitate redundant connectivity according to at least one embodiment;
- Fig. 3: is a schematic process chart depicting an exchange of messages and data for requesting a base station identifier according to at least one embodiment;
- Fig. 4: is a schematic process chart depicting an exchange of messages and data for requesting user equipment measurement reports according to at least one embodiment; and;
- Fig. 5: is a schematic process chart depicting an exchange of messages and data for operating a handover procedure according to at least one embodiment.

### Description of Examples

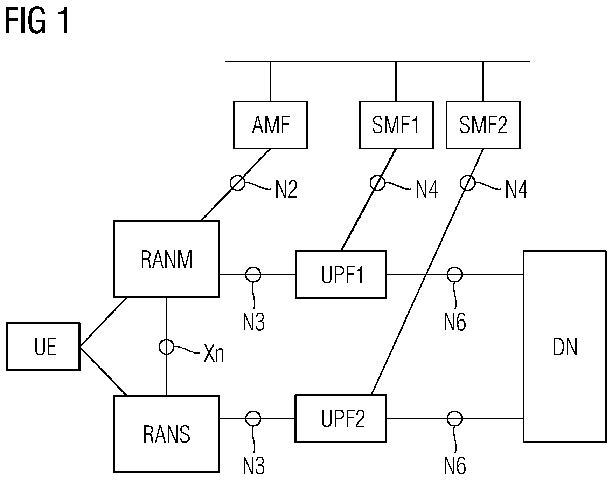

FIG. 1 illustrates an exemplary 3GPP network operated to establish redundancy sessions in a 3GPP radio network. Fig. 1 thereto shows a user equipment UE being connected to two different radio access nodes RANM, RANS comprising a master radio access node RANM and a secondary radio access node RANS.

FIG. 1 further illustrates a series of reference points, depicted as small circles along lines connecting various rectangular-shaped functional units within the 3GPP system as shown.

These reference points are briefly elucidated below:
- A second reference point N2 serves as the control plane interface between a radio access network RANM, RANMS and an access and mobility management function AMF.
- A third second reference point N3 provides user plane connectivity between the radio access network RANM, RANMS and the user plane function UPF1, UPF2.
- A fourth reference point N4 connects a session management function SMF1, SMF2 with the user plane function UPF1, UPF2 to manage user plane packet forwarding, quality of service (QoS) flows, and session context.
- A sixth reference point N6 connects the user plane function UPF1, UPF2 to the data network DN for forwarding user data to an external network such as a private enterprise network or a production facility networks.

FIG. 1 further shows an access and mobility management function AMF, a first session management function SMF1, a second session management function SMF2, a first user plane function UPF1 and a second user plane function UPF2, both user plane functions UPF1, UPF2 being associated to a data network DN. The access and mobility management function AMF may provide services for a user equipment UE such as authentication, authorization, mobility management, etc. Although the user equipment UE as shown may utilize multiple access technologies, it may also be associated with a single access and mobility management function AMF, as the access and mobility management function AMF may be independent of access technologies.

One of the session management functions SMF1, SMF2 may be responsible for session management and may allocate network addresses the user equipment UE and/or select and control the user plane functions UPF1, UPF2 for data transfer. If a user equipment UE is an endpoint of multiple PDU sessions - ranging between the respective user plane function UPF1, UPF2 and its respectively connected radio access node RANM, RANS as shown in Fig. 1 - different session management functions SMF1, SMF2 may be allocated to each session to manage them individually and possibly provide different functionalities per session.

In the example of Fig. 1, the first session management function SMF1 may manage a first PDU session, and a second session management function SMF2 may manage a second PDU session. When the PDU sessions are established, it may be indicated to each radio access node RANM, RANS to separately handle the two PDU sessions using dual connectivity.

In some situations, however, dual connectivity may not be available, for example if the user equipment UE is not in the coverage of a - not shown - base station associated with the radio access network RANS. Hence, a base station or gNB receiving an order to apply dual connectivity may result in failure to establish redundant PDU sessions. Further, this traditional approach of dual connectivity as shown in FIG. 1 does not consider alternative approaches for establishing redundancy.

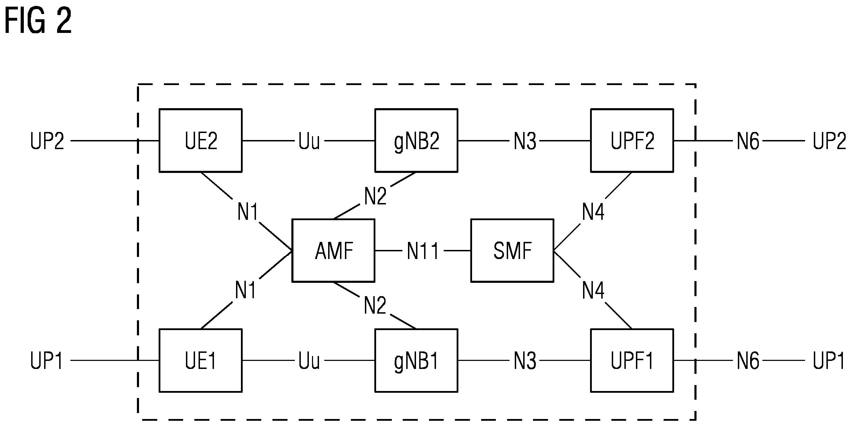

FIG. 2 illustrates a schematic diagram of functional units participating in a mobile communication network to facilitate redundant connectivity according to at least one embodiment. The configuration depicted in FIG. 2 primarily differs from the established dual connectivity setup shown in FIG. 1 by employing redundant user plane paths UP1, UP2 which do not converge within a single user equipment but rather extend the separation of the redundant user plane paths UP1, UP2 beyond two distinct user equipment UE1, UE2.

The embodiments rectify the traditional shortcomings of converging separated paths within a single user equipment. While traditional methods stipulate OAM configuration of gNBs on a per-cell basis, the present embodiments only require configuration of the session management function SMF. While known methods are limited to user equipment hosted on the same device, the present embodiments may further accommodate user equipment UE1, UE2 hosted on different devices. The present embodiments allow for extending redundancy beyond the converging point of one user equipment, as a single user equipment compromised the fail-safe nature of redundant data transmission in the event of its failure.

According to FIG. 2, a first User Plane Path UP1 extends over a first user plane function UPF1, a first base station gNB1 and a first user Equipment UE1. A second user plane path UP1 extends over a second user plane function UPF2, a second base station gNB2 and a second user Equipment UE2. In contrast to FIG. 1, FIG. 2 illustrates the radio access network or RAN layer in greater detail, featuring two base stations, gNB1 and gNB2. The qualification of lines depicted on the left in FIG. 2, which extend from the first and second user Equipment UE1, UE2 to the left and being labeled as first and second user plane path UP1, UP2 in the drawing, is technically not entirely correct, as user plane paths through the 5G system are customarily restricted to the 5G System. For the sake of clarity, these lines have been labeled as the first and second user plane UP1, UP2 to emphasize their horizontal extension. However, it should be noted that this designation is technically valid only within the 5G System, which is in represented as a dashed box in the drawing.

FIG. 2 illustrates a series of reference points, which, unlike FIG. 1, are not depicted as small circles along lines connecting various rectangular-shaped functional units within the 3GPP system but alternatively depicted in-line with the connecting lines. This alternative depiction does not intend to convey any technical difference. In addition to the reference points explained in FIG. 1, the following additional reference points are depicted in FIG. 2:
- A first reference point N1 manages non-access stratum signaling - i.e. signaling proto-cols and procedures that support the control and management of the user equipment between user equipment UE and an access and mobility management function AMF for handling registration, connection, and session management.
- An eleventh reference point N11 connects the access and mobility management function AMF to the session management function SMF for managing tasks such as creating, updating, and terminating protocol data unit PDU sessions.
- A reference point Uu interfaces between the user equipment UE1, UE2 and base stations gNB1, gNB2 for handling radio communication between the user equipment UE1, UE2 and the 3GPP communication network, facilitating both control and user data transmission.

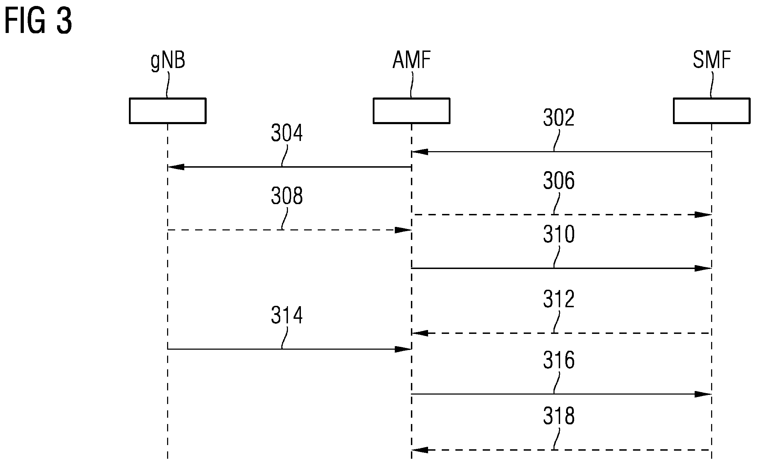

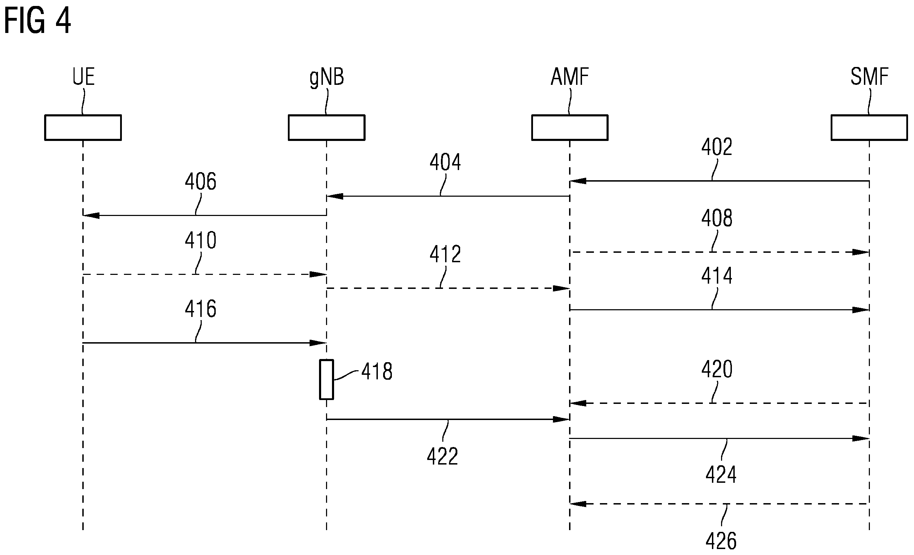

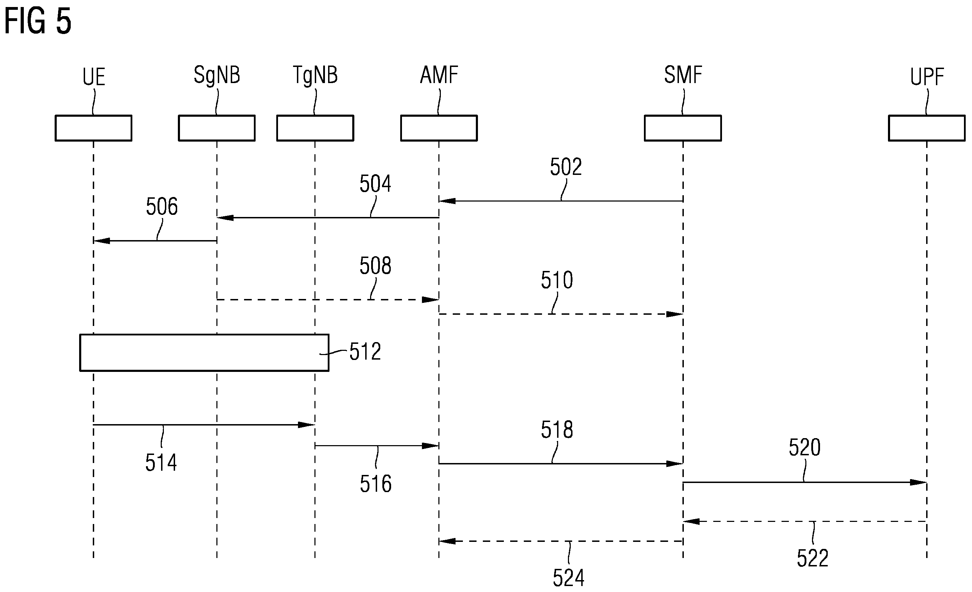

According to an embodiment, a method for operating a network node embodied by a mobile 3GPP communication network to facilitate a redundant data transmission via at least two redundant user planes extending through the network node, each of said at least two redundant user planes being respectively terminated by a user plane function UPF1, UPF2 and a wirelessly interfaced user equipment UE1, UE2, each user plane function UPF1, UPF2 being network-externally connectable with one or more network paths of a redundant data network, the method including the steps of:
1. Configuring and/or providing subscription parameters for at least one user equipment UE1, UE2
   In order to support subscriptions for each user equipment UE1, UE2 designated to be involved as an endpoint of an upcoming or existing redundant path, the following parameters may be configured for each user equipment UE1, UE2:
      - a subscription permanent identifier or SUPI may be assigned to the individual user equipment UE1, UE2 and remains associated with them throughout their subscription lifetime. The SUPI enables seamless roaming and interoperability between different networks and service providers.
      - a data network name or DNN identifying the data network to which the user equipment UE1, UE2 are connected to ensures that the user equipment UE1, UE2 accesses the correct network resources and services. The data network names for the first and second user plane UP1, UP2 may be chosen uniquely in order to indicate that they belong to a pair of redundant, non-overlapping user planes. Example data Network names may be »redundant 1« and »redundant 2«.
      - corresponding Single Network Slice Selection Assistance Information or S-NSSAI. By providing corresponding S-NSSAI to both UEs, they may be accurately directed to the corresponding network resources and services to facilitate network slicing on a shared physical infrastructure.
      - an allowed protocol data unit or PDU Session type according to the specific type of data connectivity that may be established between user equipment UE1, UE2 and the data network redundantly connected by the respective interface N6 of the user plane functions UPF1, UPF2.
   Some or more subscription parameters - which may also be referred to as subscription information - as specified above may be maintained in a - not shown - user data repository or UDR. The session management function SMF may read these parameters from the user data repository and - based on disjoint data network names and other parameters - recognize that the user planes have to be kept separate.
2. Establishment of PDU Sessions for User Planes
   In a second step, an establishment of two or more PDU Sessions may ensue, which may be referred to as a first user plane UP1 and a second user plane UP2. The establishment of two parallel PDU sessions may usually involve method steps for setting up a regular PDU session as referenced in clause 4.2.2.2.2 of the technical specification 3GPP TS 23.502 V19.1.0 (2024-09), edited by the 3rd Generation Partnership Project Technical Specification, version 19.1.0, published in September 2024, hereinafter referred to as the '502 specification. The method steps for setting up one or more regular PDU session as referenced in the '502 specification is hereby incorporated by reference. The session management function SMF may retrieve subscription parameters of the user equipment UE1, UE2 to assign a user plane function or UPF for establishing a PDU session involving the user equipment. The session management function SMF may retrieve subscription parameters of the user equipment UE1, UE2 particularly upon an occurrence of either user equipment UE1, UE2 requesting a PDU session. The session management function SMF may look up subscription information for the user equipment UE1, UE2 by optionally utilizing a - not shown - unified data management or UDM procedure. The session management function SMF may retrieve, among others, the subscription parameters configured for each user equipment UE1, UE2 as specified in the first step above. Some or more of these parameters may be maintained in a user data repository or UDR.
   Utilizing the parameters explained above - optionally along with further information provided by the unified data management - the session management function SMF may select suitable user plane functions UPF1, UPF2 as so-called PDU session anchors. One possible procedure for selecting, by the session management function SMF, suitable user plane functions UPF1, UPF2 as so called PDU Session Anchors is to utilize a Nnrf_NFDiscovery service according to clause 5.3 of the technical specification 3GPP TS 29.510 V18.8.0 (2024-09), edited by the 3rd Generation Partnership Project Technical Specification, version 18.8.0, published in September 2024, hereinafter referred to as the '510 specification. For this purpose, a database in a network repository function or NRF may be advantageously configured to identify disjoint user plane functions UPF1, UPF2 for the two PDU sessions. This database configuration may be part of a »day-zero configuration« - e.g. an initial setup and configuration performed before the mobile 3GPP communication network is operational - of the network repository function. Alternatively, said database configuration may be updated via operations, administration, and maintenance or OAM of the communication network. According to an embodiment, the network repository function may provide the session management function SMF with a respective pointer pointing to the respectively assigned user plane functions UPF1, UPF2, in order to support the session management function SMF in identifying and/or selecting a respective user plane function UPF1, UPF2. According to an embodiment, the session management function SMF may then establish a packet forwarding control protocol or PFCP session with the selected user plane functions UPF1, UPF2.
   Subsequently, during a PDU session request the session management function SMF may request a setup of base station resources. This request is relayed to an access and mobility management function or AMF . The bases stations gNB1, gNB2 may be referred to as gNodeB (Next Generation Node B) or gNB. Once the setup of base station resources gNB1, gNB2 is accomplished, the access and mobility management function or AMF may notify the session management function SMF about the successful establishment of the entire PDU session.
   The base stations gNB1, gNB2 communicate wirelessly with the user equipment UE1, UE2 using the Uu interface.
   It is noted that a port of the network interface card or NIC to which the user plane functions UPF1, UPF2 forwards N6 traffic is typically part of the day-zero configuration of the UPF or may be selected via operations, administration, and maintenance or OAM.
3. Acquisition of base station identifiers
   In a third step, the session management function SMF may determine whether a base station gNB1 engaged in a protocol data unit session is concurrently supports the protocol data unit session that transports the duplicate traffic. This undesired case is to be avoided and/or corrected by the embodiments, as the intended redundancy level requires separate and/or non-overlapping redundancy paths along the entirety of the protocol data unit sessions throughout the respective user planes UP1, UP2.
   It is imperative to note that this isolated third step alone is already a distinctive feature of the present embodiments, compared with the prior art. Currently, no use case has required, nor has it been suggested within the existing 3GPP 5G standards, that a session management function SMF may need to acquire knowledge about the underlying radio access network or RAN configuration in general, and identifiers from the base stations gNB1, gNB2 in particular.
   In order to extend existing standard procedures for the step of acquiring base station identifiers by the session management function SMF, the present embodiments utilize a novel N1N2 message transfer mechanism, specifically designed for a subscription to radio access network or RAN configuration updates in order to enable the session management function SMF to gain knowledge of the identifiers from the base stations gNB1, gNB2 being part of the PDU session. FIG. 3, which shall be elaborated upon in greater detail hereinbelow, provides a conceptual illustration of how this third step may be implemented within a common 5G network infrastructure.
   Upon concluding the procedure that prompted the message exchange illustrated in FIG. 3, the session management function SMF has knowledge which base station gNB supports which PDU session and its corresponding user Plane UP1, UP2.
4. Comparing base station identifiers for both PDU sessions
   In a fourth step, the session management function SMF may now compare the base station identifiers or gNB identifiers for both or more PDU sessions. If the gNB identifiers differ - which may indicate that the user planes UP1 and UP2 extend over distinct base stations gNB1, gNB2 to distinct user equipment UE1 and UE2, thereby traversing disjoint or non-overlapping paths - no further action is required. However, if the gNB identifiers are identical, the session management function SMF may be required to move one of the PDU sessions in the concurrently engaged base station to a target base station in order to (re)instantiate a non-overlapping path within the current PDU session and/or instantiate a new PDU session with a non-overlapping path. This is accomplished in the steps following this fourth step.
   In order to make the decision of choosing an appropriate target base station, the session management function SMF may need to ascertain which candidate base stations are within the reach of the current user equipment serving as an endpoint of the present PDU sessions. The subsequent fifth step may prepare for the selection of an appropriate target base station by providing wireless connection data of the candidate bases stations along with the user equipment to be connected with the target base station.
5. Setting up a subscription for periodic user equipment measurement reports
   In an optional fifth step, the session management function SMF may set up a subscription to receive periodic measurement reports from the user equipment UE1, UE2 for each PDU session. These measurement reports encompass base station identifiers of other third base stations - including base stations that are not connected or are not intended to be connected - along with measurements of the downlink signal strength for each base station gNB1, gNB2. FIG. 4, which shall be elaborated upon in greater detail hereinbelow, provides a conceptual illustration of how this fifth step may be implemented within a common 5G network infrastructure.
   Upon concluding the procedure that prompted the message exchange illustrated in FIG. 4, the session management function SMF possesses comprehensive insight into the radio environment surrounding and/or permeating its administered radio access network or RAN, which is at least partially spanned by the base stations gNB1, gNB2 under the least indirect control by the session management function SMF. The insight into the radio environment gained by the fifth step may prepare for the selection of an appropriate target base station by providing wireless connection data of the candidate bases stations along with the user equipment to be connected with the target base station.
6. SMF-initiated handover for user equipment
   In order to make the decision of choosing an appropriate target base station, the session management function SMF may identify candidate base stations being within a wireless transmission range of the current user equipment serving as an endpoint of the present PDU session. In the previous optional sixth step, the session management function SMF may have identified candidates e.g. based on an assessment of the UE measurement reports received in the optional previous fifth step. According to this and other assessments, the session management function SMF may determine which user plane UP1, UP2 is to be migrated from the presently operated or serving base station SgNB to a target base station TgNB.
   Thereafter, the session management function may request the access and mobility management function or AMF to initiate a migration. This migration is achieved by handing over one user equipment UE which was previously assigned to the same base station SgNB as a second user equipment - not shown in FIG. 5 - from the previously serving base station SgNB to a target base station TgNB. This handover may be modeled in accordance with the N2 handover as delineated in clause 4.9.1.3 of the '502 specification. Under direction of the session management function SMF the concurrently engaged or serving base station SgNB is migrated to a target base station TgNB exclusively engaged in the first protocol data unit session.
   As a consequence of the handover procedure involving the message exchange as illustrated in FIG. 5, previously overlapping data flows are separated. Having concluded the procedure causing the message exchange as illustrated in FIG. 5, data flows assigned to the first and the second User Plane UP1, UP2 are intentionally routed via different base stations gNB1, gNB2 again.
   While conventionally known handover operations - aimed at improving the radio connection - are typically managed by the base station gNB or the access and mobility management function or AMF, the handover initiated by the session management function SMF according to embodiments - intended to reinstate redundancy on separate user planes UP1, UP2 - is initiated by the session management function SMF.
7. Checking base station-initiated handover of user equipment due to mobility
   In cases where a base station decides to hand over one user equipment UE connected to it to a new base station, the session management function SMF is notified upon the completion of the handover according to clause 4.9.1.2 of the '502 specification. In the following this is assumed for the first user equipment UE1.
   According to an optional seventh step, the session management function SMF may exclude - e.g. by using the methodology according to step three described above - the possibility that the two PDU Sessions for the first and the second user plane UP1, UP2 are now undesirably served by the same base station due to the base-station initiated handover.
   Potentially overlapping paths may occur at the left end of Figure 2, where, for example, both user equipment UE1, UE2 may be - not shown - undesirably connected to a common second base station gNB2 rather than being separately connected to distinct base stations gNB1, gNB2 as intended by their designated user planes UP1, UP2. Such common connections may frequently arise during routine operations, where a handover of a first user equipment UE1 moving out of wireless transmission range from the previously connected base station gNB1 to a base station gNB2 with a stronger signal gNB2 takes place. While such handovers may be typically advantageous for improving the radio connection of the handed-over first user equipment UE1, they are undesirable in the context of the present embodiments as they may result in overlapping paths on the second User Plane UP2, thereby compromising uninterrupted redundancy.
   In this undesired scenario, where the two PDU Sessions UP1, UP2 converge non-redundantly at the same base station gNB2, the session management function SMF may therefore take countermeasures und decide which user equipment UE2 is to be handed over to a new base station. The session management function SMF may further decide to which base station gNB2 the user equipment UE2 may be transferred by a hand-over, e.g. by using the methodology according to step four described above. Subsequently, the session management function SMF may initiate the handover to the new base station gNB2, e.g. by following the methodology according to step six described above. In accordance with the present embodiments, a novel approach is employed wherein the session management function SMF initiates the handover to separate previously overlapping paths into distinct paths. This separating handover may be executed subsequent to the prior handover, which was intended to enhance the radio connection but resulted in reduced redundancy.
   While the conventional handover - aimed at improving the radio connection - is typically managed by the base station gNB or the access and mobility management function or AMF, the novel separating handover according to embodiments - intended to reinstate redundancy on separate user planes UP1, UP2 - is managed by the session management function SMF.

The sequence of the procedural steps 1 to 7 outlined above is not mandatory. Rather, some procedural steps may be taken, omitted or varied ad-hoc according to a specific scenario and/or at the discretion of the session management function SMF. In alternative embodiments, some or all of the aforementioned procedural steps 1 to 7 may be carried out in a different order. Furthermore, a person skilled in the art will recognize from the above description that not all of the steps or intermediate steps described are essential for the success of the respective embodiments. Instead, most of the steps mentioned may enhance an applicability of the embodiments to specific use cases, without being necessarily required in general use cases.

In the following, the procedures mentioned in the above steps will be further elucidated through the corresponding exchange of messages.

FIG. 3 illustrates a schematic process chart depicting an exemplary and chronologically ordered exchange of control and data transfer amongst various functional units SMF, AMF, gNB collaborating to subscribe the session management function SMF to radio access network or RAN configuration updates. The objective of this procedure is to enable the session management function SMF to gain knowledge of the base stations gNB1, gNB2 being part of a specific PDU session.

In FIG. 3 consecutive points in time are chronologically ordered in a vertical direction, such that later points in time are further down than earlier points in time. For each functional unit SMF, AMF, gNB shown in FIG. 3, a respective vertical dashed line is plotted to illustrate a message exchange of the respective functional unit in relation to the point in time, or more exactly: in relation to a state evolution of the respective functional unit.

By means of a request message 302 the session management function SMF may initiate a subscription request for gNB identifier updates which may initially be sent to the access and mobility management function AMF. This request message 302 requests subscription to gNB identifier updates. The request message 302 may be structured:
Namf_Cornmunication_N1N2MessageTransfer,
providing the following parameters:
   UE Context ID, PDU Session ID,
and containing the request:
   N2 SM Info (= subscribe gNB ID).

In more detail, the request message 302 may include:
- UE Context ID, a unique identifier assigned to User Equipment UE1, UE2 by the network for managing the connection and mobility of User Equipment UE1, UE2 across different network elements;
- PDU Session ID, which helps the access and mobility function AMF determine the appropriate access path to the user equipment UE1, UE2;
- an N2 SM Info request, which specifies the information that the access and mobility management function AMF is supposed to relay between the radio access network or RAN and the session management function SMF. According to the present embodiments, the base station identifiers or gNB identifiers of the base station gNB are requested - or more specific, subscribed - by this N2 SM Info field.

The session management function SMF may thereby advantageously distinguish between a first user plane UP1 and a second user plane UP2 utilizing the UE Context ID and the PDU Session ID, which are unique for the corresponding PDU Sessions.

By means of a forwarded request message 304, the access and mobility management function AMF, having received the initial request message 302 from the session management function SMF, forwards the request as a Subscription RAN Configuration to one or more base stations gNB addressed by the base station identifier of the initial request message 302. The subscription RAN Configuration message 304 may include the following parameter:
PDU Session ID
and the request:
N2 SM Info (= gNB ID).

By means of a confirmation message 306, the access and mobility management function AMF may confirm a successful reception of the request message 302 to the session management function SMF. The confirmation message may be formatted as:
Namf_Cornmunication_N1 N2MessageTransfer 200 OK,
to confirm successful reception and further providing the following string arguments:
   Cause (= N1_N2_TRANSFER_INITIATED)
to elucidate the cause with reference to the N1N2 message transfer initiated by the session management function SMF.

By means of an acknowledgement message 308, the base station gNB may acknowledge a successful reception of the subscription RAN Configuration message 304 to the access and mobility management function AMF. The acknowledgement message 308 may be formatted as:
Subscription RAN Configuration,
providing the following parameter:
   PDU Session ID,
and the reply:
   N2 SM Info (= gNB ID subscription successful).

The SM Info field may include data acknowledging that the requested subscription for the requested bases station identifier or gNB ID has been successfully configured.

By means of an update request message 310, the access and mobility management function AMF, having received the acknowledgement message 308 from the base station gNB, may update the session management function SMF with the subscribed base station identifiers or gNB ID and report the subscription was successful. The update request message 310 may be formatted as:
Nsmf_PDUSession_UpdateSMContext request
providing the following string arguments:
SM Context ID. N2 SM info(= PDU Session ID, gNB ID subscription successful)

By means of an update response message 312, the session management function SMF may confirm the successful reception of the update request message 310.

The update response message 312 may be formatted as:
Nsmf_PDUSession_UpdateSMContext response 204.

By means of an RAN configuration update service message 314, user equipment UE1, UE1 connected with the particular base station gNB may now transmit respective gNB identifiers to the access and mobility management function AMF using an RAN configuration update service. The configuration update response message 312 may be formatted as RAN Configuration Update, providing the following string arguments:
PDU Session ID, N2 SM Info(=gNB ID).

By means of an update request message 316, the access and mobility management function AMF, having received the RAN configuration update service message 314 from the base station gNB, may now forward the gNB identifier to the session management function SMF. The update request message 316 may be formatted as:
Nsmf_PDUSession_UpdateSMContext request
providing the following string arguments:
SM Context ID, N2 SM info (= PDU Session ID, gNB ID).

By means of an update response message 318, the session management function SMF may confirm reception of the base station identifiers or gNB ID to the access and mobility management function AMF.

The update response message 318 may be formatted as:
Nsmf_PDUSession_UpdateSMContext response 204.

Having concluded the procedure causing the message exchange as illustrated in FIG. 3, the session management function SMF eventually has knowledge which base station gNB facilitates which PDU Session and the related User Plane.

FIG. 4 illustrates a schematic process chart depicting an exemplary and chronologically ordered exchange of control and data transfer amongst various functional units SMF, AMF, gNB, UE collaborating to request user equipment measurement reports.

As in the previous figure, in FIG. 4 consecutive points in time are chronologically ordered in a vertical direction, such that later points in time are further down than earlier points in time. For each functional unit SMF, AMF, gNB, UE shown in FIG. 4, a respective vertical dashed line is plotted to illustrate a message exchange of the respective functional unit in relation to the point in time.

By means of a request message 402 the session management function SMF may initiate a subscription request which may be sent to the access and mobility management function AMF in the first instance. The request message 402 may be structured as:
Namf_Cornmunication_N1N2MessageTransfer,
providing the following parameters:
   UE Context ID, PDU Session ID,
and the request:
   N2 SM Info(= subscribe meas UE, periodicity).

By means of a forwarded request message 404, the access and mobility management function AMF, having received the initial request message 402 from the session management function SMF, forwards the request as a Subscription RAN Configuration to one or more base stations gNB addressed by the base station identifier of the initial request message 402. The subscription RAN Configuration message 404 may include the following parameter:
PDU Session ID,
and the request:
N2 SM Info(= meas UE, periodicity).

By means of a further forwarded request message 406, the base station gNB, having received the previously forwarded request message 404 from the access and mobility management function AMF, may forward the request as a Configure UE measurement type to the user equipment UE. The subscription RAN Configuration message 404 may include the following instruction: reportConfigType = periodic.

By means of a confirmation message 408, the access and mobility management function AMF may confirm a successful reception of the request message 402 to the session management function SMF. The confirmation message may be formatted as:
Namf_Cornmunication_N1 N2MessageTransfer 200 OK,
to confirm successful reception and further providing the following string argument:
   Cause (= N1_N2_TRANSFER_INITIATED)
to elucidate the cause with reference to the N1N2 message transfer initiated by the session management function SMF.

By means of an acknowledgement message 410, the user equipment UE may acknowledge a successful reception of the measurement request 406 to the base station gNB. The acknowledgement message 408 may be formatted as Configure UE measurement type acknowledge.

By means of an acknowledgement message 412, the base station gNB may acknowledge a successful reception of the subscription RAN Configuration message 404 to the access and mobility management function AMF. The acknowledgement message 412 may be formatted as:
Subscription RAN Configuration,
providing the following string arguments:
PDU Session ID, N2 SM Info(= meas UE subscription successful, periodicity)

By means of an update request message 414, the access and mobility management function AMF, having received the acknowledgement message 412 from the base station gNB, may notify the session management function SMF about the successful subscription of UE measurement data. The update request message 414 may be formatted as:
Nsmf_PDUSession_UpdateSMContext request
providing the following parameter:
   SM Context ID,
and the notification N2 SM info(= PDU Session ID, meas UE subscription successful, periodicity)

By means of an UE measurement report message 416, user equipment UE connected with the base station gNB may transmit a measurement report to the to the base station gNB using a UE measurement report.

Upon receipt of the measurement report message 416 from the User Equipment UE, the base station gNB may locally generate an SMF report within a time frame depicted as a vertically elongated box 418. This SMF report is destined to be subsequently forwarded to the session management function SMF.

By means of an update response message 420, the session management function SMF may confirm reception of the subscription confirmation by the formerly received update request message 414 to the access and mobility management function AMF.

The update response message 312 may be formatted as:
Nsmf_PDUSession_UpdateSMContext response 204.

After the SMF report has been created, the base station gNB may send a configuration update response message 422 be formatted as RAN Configuration Update to transmit the SMF report or UE measurement report. The RAN Configuration Update may provide the following string arguments:
PDU Session ID, N2 SM Info(= UE meas report)

By means of an update request message 424, the access and mobility management function AMF, having received the update response message 422 including the SMF report from the base station gNB, may now forward the SMF report to the session management function SMF. The update request message 424 may be formatted as:
Nsmf_PDUSession_UpdateSMContext request
providing the following string arguments:
SM Context ID, N2 SM info(= PDU Session ID, UE meas report)

By means of an update response message 426, the session management function SMF may confirm reception of the SMF report to the access and mobility management function AMF.

The update response message 426 may be formatted as:
Nsmf_PDUSession_UpdateSMContext response 204.

Having concluded the procedure causing the message exchange as illustrated in FIG. 4, the session management function SMF will periodically receive measurement reports from the user equipment UE1, UE2 for each PDU session to acquire a comprehensive insight into the radio environment surrounding and/or permeating its administered radio access network or RAN. Optionally - not illustrated in FIG. 4 - upon receiving a sufficient number of measurements or upon the expiration of a preset timer, the Session Management Function (SMF) may unsubscribe from the UE measurement reports.

FIG. 5 illustrates a schematic process chart depicting an exemplary and chronologically ordered exchange of control and data transfer amongst various functional units UPF, SMF, AMF, TgNB, SgNB, UE collaborating to execute a handover, as directed by the Session Management Function SMF.

As in the previous figure, in FIG. 5 consecutive points in time are chronologically ordered in a vertical direction, such that later points in time are further down than earlier points in time. For each functional unit UPF, SMF, AMF, TgNB, SgNB, UE shown in FIG. 4, a respective vertical dashed line is plotted to illustrate its state evolution.

By means of a request message 502 the session management function SMF may initiate a service request sent to the access and mobility management function AMF. The request message 502 may be formatted as:
Namf_Execute,
providing the following string arguments:
UE Context ID, PDU Session ID, execution (= handover, target gNB ID).

The service requested by the session management function SMF is a handover to the target base station TgNB as specified in the arguments for the request execution above.

By means of a forwarded request message 504, the access and mobility management function AMF, having received the initial request message 502 from the session management function SMF, may forward the request as a handover request to a serving base station SgNB currently connecting and controlling the user equipment UE which is subject to hand over the control of the user equipment UE to a target base station TgNB. The source base station SgNB currently connecting and controlling the user equipment UE is addressed by the UE context ID included in the initial request message 502. The forwarded request message 504 may include the following string arguments: PDU Session ID, Target gNB ID, the latter argument identifying the target base station TgNB.

By means of a handover command message 506, the serving base station SgNB, having received the previously forwarded request message 504 from the access and mobility management function AMF, may forward the request as a handover command to the user equipment UE. This request contains the gNB ID of TgNB.

By means of an handover request acknowledgement message 508, the serving base station SgNB may acknowledge a successful reception of the handover command message 506 to the access and mobility management function AMF.

By means of a confirmation message 510, the access and mobility management function AMF may confirm a successful reception of the request message 502 to the session management function SMF. The confirmation message may be formatted as:
Namf_Execute 200 OK,
to confirm successful reception and further providing the following string arguments:
   Cause (= handover initiated)
to elucidate the cause with reference to the N1N2 message transfer initiated by the session management function SMF.

When the user equipment UE registers with the target base station TgNB, a process of synchronization of the user equipment UE to the target base station TgNB and the establishment of radio resource control may ensue within a time frame depicted as a horizontally elongated box 512.

By means of a handover confirmation message 514, the user equipment UE may acknowledge a successful handover to the target base station TgNB, which forwards this confirmation as a handover notification message 516 to the access and mobility management function AMF.

By means of an update request message 518, the access and mobility management function AMF, having received the handover notification message 516 from the access and mobility management function AMF, may update the session management function SMF about the handover. The update request message 518 may be formatted as:
Nsmf_PDUSession_UpdateSMContext request.

By means of a PFCP request message 520, the session management function SMF may request a session modification from the user plane function UPF so that user plane traffic toward the user equipment UE is directed to the new base station TgNB.

By means of a PFCP session modification response message 522, the user plane function UPF may confirm modification of the session to the session management function SMF.

By means of an update response message 524, the session management function SMF may confirm the update request message to the access and mobility management function AMF. The update response message 524 may be formatted as:
Nsmf_PDUSession_UpdateSMContext response.

As a consequence of the procedure causing the message exchange as illustrated in FIG. 5, previously overlapping data flows are separated by handing over one user equipment UE1 having been commonly assigned to a same base station SgNB as a second user equipment UE2 from the previously serving base station SgNB to a target base station TgNB. Having concluded the procedure causing the message exchange as illustrated in FIG. 5, data flows on assigned to the first and the second User Plane UP1, UP2 are again routed via different base stations gNB1, gNB2.

In summary, the proposed embodiments involve operating a network node within a mobile 3GPP communication network to enable redundant data transmission through separate user planes UP1, UP2. Each user plane is terminated by a user plane function UPF1 and UPF2 and wirelessly connected to user equipment UE1 and UE2. These user plane functions can connect externally to one or more network paths of a redundant data network. The method includes providing subscription parameters for at least one user equipment to set up two protocol data unit sessions and assigning the user equipment to one of the user planes. The session management function SMF retrieves these subscription parameters to assign the user plane functions and set up the sessions. The session management function may then check if a base station gNB1 involved in one session is also involved in the session for the duplicated traffic. If the base station is engaged in multiple sessions, the session management function moves one PDU session to a target base station TgNB . This ensures that redundant data transmission is maintained by having separate paths for each session.

According to an embodiment, a selection of the user plane function UPF according to the second step explained above may also be based on a Local Area Data Network or LADN Service Area according to clause 5.6.5 of the '501 specification. The LADN Service Area may refer to a specific geographic region where certain data network services are available. According to an embodiment, a selection of the user plane function UPF according to the second step is not or not only based on the Data Network Name but the LADN Service Area.

According to an alternative first step the Data Network Names, the User Equipment (UE) identities, the PDU Session types, the Single Network Slice Selection Assistance Information (S-NSSAI), and/or the LADN service areas are provisioned to the Unified Data Repository (UDR) via the Network Exposure Function - not shown in Figure 2 - or NEF in accordance with the technical specification 3GPP TS 29.522 V17.16.0 (2025-01) as edited by the 3rd Generation Partnership Project Technical Specification, version 17.16.0, published in January 2025, describing the protocol for the Network Exposure Function NEF Northbound APIs in the 5G system. This specification outlines the interface between the NEF and an Application Function AF and includes the related stage 2 functional requirements.

According to an embodiment, a Packet Filter may be used for identifying incoming frames or packets as belonging to one of the two parallel paths. The user equipment UE or the user plane function UPF may then map the frames or packets to the pertinent PDU session. The PDU session may be of type IP or Ethernet. In the first case, incoming frames or packets may be identified or mapped by a Type of Service (IPv4) or the Traffic Class and Traffic Mask (IPv6), a source and/or destination port, and/or an IPv6 flow label. In the case of an Ethernet PDU session, incoming frames or packets may be identified or mapped by VLAN ID and/or Priority Code Point (PCP). Packet Filters may be defined in Policy-Control-and-Charging rules according to clause 5.8.2.8 of of the '501 specification.

According to an embodiment, routes or paths traversing the transport network such as from the first base station gNB1 to the respective first User Plane Function UPF1 may be selected to ensure that GTP-U tunnels for the two PDU Sessions lie on redundant non-overlapping paths. Existing mechanisms such as Multiprotocol Label Switching or MLPS may be used for creating such routes. GTP-U (GPRS Tunneling Protocol - User Plane) is a protocol used to encapsulate and transport user data packets within the mobile network.

According to an embodiment, both PDU sessions may be assigned to a dedicated network slice. This embodiment may advantageously enable a reservation of network resources for the PDU Sessions.

According to an embodiment, an expanded standard PDU Session establishment process may be used instead of the subscription service described in the third step of acquiring base station identifiers as explained above. The standard PDU session establishment process may be expanded as follows: When the access and mobility management function AMF informs the session management function SMF about the new connection to the user equipment UE - see step 15 in figure 4.3.2.2.1-1 of the '502 specification - the transmitted N2 SM Information or »N2 SM Info« may include an identifier of the serving base station gNB. This information element may need to be amended to clause 9.2.1.2 of the technical specification 3GPP TS 38.413 V16.15.0 (2024-05) as edited by the 3rd Generation Partnership Project Technical Specification, version 16.15.0, published in May 2024, which is hereinafter referred to as the '413 specification. Two alternatives of configuring the NG Application Protocol or NGAP protocol may be chosen: Either the base station gNB may include this information element in the pertinent N2 SM Information by default, or the session management function SMF may indicate in its initial N1N2 message or request message 302 to the base station gNB that it expects the gNB identifier in a confirmation message.

According to an embodiment, the session management function SMF may create an error log entry and/or issue an alert if the handover in the sixth step may be rejected by at least one of the base stations SgNB, TgNB.

According to an embodiment, each of the base stations gNB1, gNB2 may be served by - not shown - distinct access and mobility management function AMF.

According to an embodiment, the gNB handover in the sixth step six may use a Dual-Active Protocol Stack according to clause 15 of the technical specification 3GPP TS 38.213 V18.6.0 (2025-03) as edited by the 3rd Generation Partnership Project Technical Specification, version 18.6.0, published in March 2025. The Dual-Active Protocol Stack allows simultaneous operation of two active connections, enhancing redundancy and reliability during handovers.

According to an embodiment, the session management function SMF may initiate a handover to another target base station TgNB in case the serving base station gNB may indicate that it can no longer fulfill Quality of Service or QoS conditions for the present PDU Session.

According to an embodiment, the session management function SMF may request QoS monitoring reports from both user plain function UPF1, UPF2. The session management function SMF may request reports on the per-packet Uplink and Downlink packet delay. The QoS monitoring may be implemented according to clauses 5.8.2.18 and/or 5.45 of the '501 specification. The current 3GPP specification, however, does not yet support per-packet measurement reports.

According to an embodiment, the session management function SMF may use per-packet-delay measurements of two or more PDU sessions to infer a time skew between them. This skew may serve as a criterion for initiating a handover to another base station, for instance, if the skew exceeds a preset limit or if the skew exhibits a persistent drift.

According to an embodiment, the session management function SMF requests Packet Delay Variation reports from the Policy Control Function or PCF, according to clause 5.37.7 of the '501 specification. According to an embodiment, the session management function SMF may use the Packet Delay Variation reports as input for initiating a handover to another base station.

According to an embodiment, user plain function UPF, transport network, and/or base stations gNB1, gNB2 of each user plane UP1, UP2 may be deployed on computing platforms with independent power supplies. Deploying these components on computing platforms with independent power supplies may ensure that each component may operate autonomously, enhancing overall network reliability and reducing the risk of service interruptions. According to an embodiment, user equipment UE1, UE2 may be deployed on computing platforms with independent power supplies.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method for operating a network node embodied by a mobile 3GPP communication network to facilitate a redundant data transmission via separate user planes (UP1, UP2) extending through the network node, each user plane (UP1, UP2) being terminated by a user plane function (UPF1, UPF2) and wirelessly interfaced user equipment (UE1, UE2), each user plane function (UPF1, UPF2) being network-externally connectable to one or more network paths of a redundant data network, the method including the steps of:
a) providing subscription parameters for at least one user equipment (UE1, UE2) to set up at least two protocol data unit sessions and designating said at least one user equipment (UE1, UE2) to one of the separate user planes (UP1, UP2);
b) retrieving, by a session management function (SMF) of the mobile 3GPP communication network, said subscription parameters of the at least one user equipment (UE1, UE2) to assign at least one user plane function (UPF1, UPF2) for setting up said at least two protocol data unit sessions and involving the at least one user equipment (UE1, UE2);
c) determining, by the session management function (SMF), whether a base station (SgNB) engaged in a first protocol data unit session is concurrently engaged in a second protocol data unit session and;
d) migrating, by the session management function (SMF), from the concurrently engaged base station (SgNB) to a target base station (TgNB) exclusively engaged in the first protocol data unit session.

2. The method according to claim 1, wherein providing subscription parameters includes maintaining said subscription parameters in a user data repository.

3. The method according to one of the aforementioned claims, wherein determining whether the base station (gNB1) engaged in the first protocol data unit session is concurrently engaged in a second protocol data unit session includes requesting, by the session management function (SMF), a subscription of at least one for base station identifier update to gain knowledge which base station facilitates which protocol data unit session and its related user planes (UP1, UP2).

4. The method according to one of the aforementioned claims 1-2, wherein determining whether the base station (gNB1) engaged in the first protocol data unit session is concurrently engaged in a second protocol data unit session includes employing a protocol data unit session establishment process including a message transmitting an N2 SM Information including an identifier of the serving base station (SgNB).

5. The method according to claim 3 wherein determining concurrent engagement includes the steps of:
- comparing a first base station identifier assigned to a first user plane function (UPF1) of said separate user planes (UP1, UP2) with a second base station identifier assigned to a second user plane function (UPF2) of said separate user planes (UP1, UP2); and;
- concluding that the base station with the first base station identifier and the base station with the second base station identifier are concurrently engaged in a common data unit session for the case that the first base station identifier and the second base station identifier match.

6. The method according to one of the aforementioned claims, wherein the step of migrating from the concurrently engaged base station (SgNB) to a target base station (TgNB) is preceded by a step of identifying candidate base stations being within a wireless transmission range of user equipment serving as an endpoint of the protocol data unit session of the concurrently engaged base station base station (SgNB).

7. The method according to one of the aforementioned claims, wherein the step of migrating from the concurrently engaged base station (SgNB) to a target base station (TgNB) is initiated by the session management function (SMF) by handing over one user equipment assigned to the concurrently engaged base station (SgNB) to the target base station (TgNB).

8. The method according to one of the aforementioned claims, including the step of initiating, by the session management function (SMF), a handover of user equipment (UE1, UE2) to an alternative base station (gNB1, gNB2) for separating previously overlapping paths into distinct paths.

9. The method according to one of the aforementioned claims, wherein assigning at least one user plane function (UPF1, UPF2) is based on a Local Area Data Network Service Area.

10. A network node embodied by a mobile 3GPP communication network configured to facilitate redundant data transmission via separate user planes (UP1, UP2) extending through the network node, each user plane (UP1, UP2) being terminated by a user plane function (UPF1, UPF2) and wirelessly interfaced user equipment (UE1, UE2), each user plane function (UPF1, UPF2) being network-externally connectable to one or more network paths of a redundant data network, the network node including:
a) a data repository for providing subscription parameters for at least one user equipment (UE1, UE2) to set up at least two protocol data unit sessions and designating said at least one user equipment (UE1, UE2) to one of the separate user planes (UP1, UP2);
b) a session management function (SMF) of the mobile 3GPP communication network configured to retrieve said subscription parameters of the at least one user equipment (UE1, UE2) to assign at least one user plane function (UPF1, UPF2) for setting up said at least two protocol data unit sessions and involving the at least one user equipment (UE1, UE2);
c) the session management function (SMF) being configured to determine whether a base station (gNB1) engaged in a first protocol data unit session is concurrently engaged in a second protocol data unit session and;
d) the session management function (SMF) being configured to migrate from the concurrently engaged base station to a target base station (TgNB) exclusively engaged in the first protocol data unit session.

11. A network node according to claim 10 wherein at least one user equipment (UE1, UE2) being deployed on computing platforms with independent power supplies.
